# EUROPEAN PATENT APPLICATION

(11) **EP 2 610 594 A2**
(43) Date of publication of application: **03.07.2013**
(21) Application number: 12196531.3
(22) Date of filing: 11.12.2012
(51) Int. Cl.: G01F 23/02

(54) **Compact reflective level indicator with glass element**

(30) Priority: 29.12.2011 IT MI20112425
(71) Applicant: Cesare Bonetti S.P.A., 20024 Garbagnate Milanese (IT)
(72) Inventor: Angelini, Paolo, 20024 Garbagnate Milanese (MI) (IT); Angelini, Raffaele, 20024 Garbagnate Milanese (MI) (IT); Dalmasso, Giuseppe, 20024 Garbagnate Milanese (MI) (IT)
(74) Representative: Raimondi, Margherita

(57) **Abstract**

Reflective level indicator comprising a central support piece (10) extending in the vertical direction (Z-Z), a glass element (30) extending in the vertical direction (Z-Z), a pair of flanges (40) situated opposite each other for closing the indicator, seals (20;120) arranged between the glass element (30) and the support piece (10) and the closing flanges (40), wherein said flanges (40) have a C-shaped central body (41) with short arms (42) extending in the longitudinal direction (X-X) along a section with a length such as to project above, in the same direction (Y-Y), by an amount smaller than the width of the glass element (30) in the longitudinal direction, and a foot (43) which extends from one of the two arms (42) of the central body (41) in the transverse direction (Y-Y) and the free end of which has a flange (43a) bent in the longitudinal direction (X-X) inwards and provided with holes (43b) for receiving tie members (44a,44b); at least two cross-pieces (45) in the form of an overturned U which extend in the longitudinal direction (X-X) and the free ends (45a) of which can be inserted in the transverse direction (Y-Y) inside respective seats (41d) of the flanges (40).

## Description

The present invention relates to a reflective level indicator.

It is known in the technical sector relating to the storage of fluids in tanks or the like that there exists the need to be able to detect from the outside the fluid level present in a tank; for this purpose it is known that there are level indicators or instruments which are connected to the tank by means of shut-off valves and which are able to measure the height of the fluid inside the tank.

In particular, known level indicators include so-called reflective indicators which comprise a chamber for containing the fluid which is frontally closed by a glass element which reflects the external light in a different manner when fluid is present or absent, resulting in two different dark/light illumination zones of the glass which allow the person outside to determine the level of the fluid.

It is also known that the fluid chamber with the respective glass element must be enclosed inside a metal casing which must ensure the mechanical stability of the assembly, the correct retention of the glass element, without damaging it, and the compression of the various fluid seals which are arranged between the glass element and the other parts of the assembly.

Examples of indicators according to the prior art are described in US 3,817,205 A, GB 258,221 A and CH 280,285 A which describe clamping devices exerting a thrust in a direction perpendicular to the glass element by means of bolts acting in the same direction.

Although performing their function, these known indicators have a number of drawbacks consisting in the fact that, in order to obtain a correct seal between the glass element and the metallic containing body, it is necessary to provide special seals and constructional forms of the metal parts of the containing body; these must be suitable for the different working conditions arising from the different fluids contained in the tanks and the different operating pressures which act on the casing and tend to deform it, resulting in losses and distortion effects which alter the precision of the indicator.

In order to offset these negative effects it is therefore necessary to provide each indicator with a special design, producing the casing in high-thickness material with a large number of connecting and fixing parts and with special graphite seals which ensure an optimum tightness; however, since these seals are soft, they are unable to suitably withstand high pressures and in general there is an increase in the overall weight and the number of component parts of the indicator and therefore the production costs and the handling and storage difficulties.

The technical problem which is posed, therefore, is that of providing a reflective level indicator which is able to withstand the deformations arising from the high pressures of the fluids, but which is also light and low-cost, thus helping achieve substantial savings in energy both during production and during packaging and transportation.

In connection with this problem it is also required that this device should have a small volume and be easy and inexpensive to produce and assemble and also be suitable for use with very different fluids and operating conditions.

These results are achieved according to the present invention by a level indicator according to the characteristic features of Claim 1.

Further details may be obtained from the following description of a non-limiting example of embodiment of the subject of the present invention provided with reference to the accompanying drawings in which:
Figure 1: is an exploded perspective view of a reflective level indicator according to the present invention;
Figure 2: is an exploded perspective view of the indicator according to Fig. 1 rotated into the working position;
Figure 3: is a front view of the indicator according to Fig. 2 assembled; and
Figure 4: is a cross-section along the plane indicated by the line IV-IV in Fig. 3.

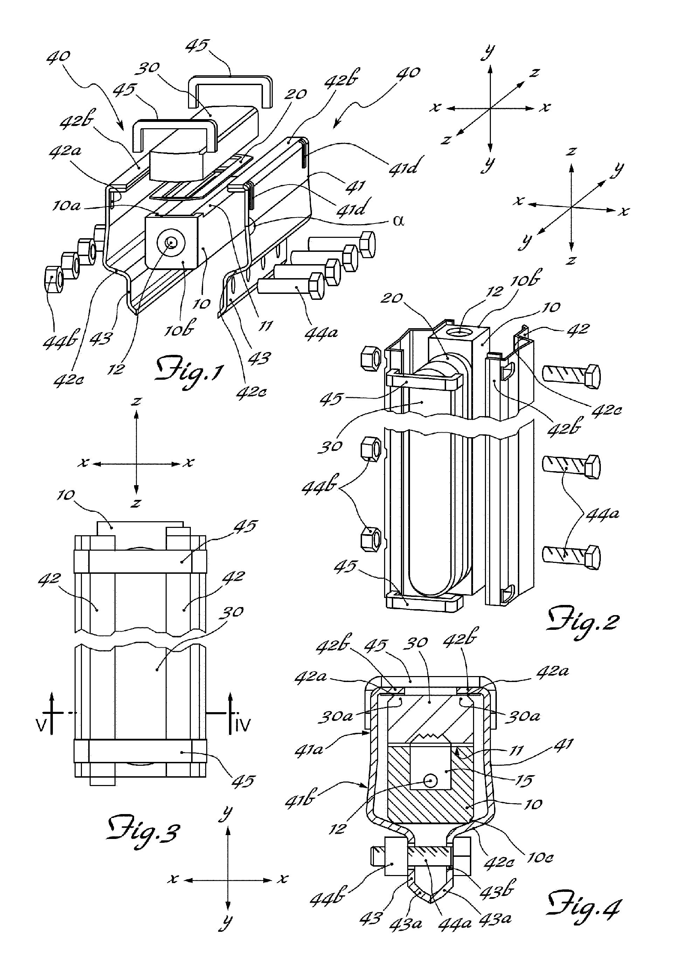

As shown in Fig. 1 and assuming solely for the sake of convenience of the description and without a limiting meaning a set of three reference axes in the following directions: vertical direction Z-Z corresponding to the larger dimension of the indicator and to the normal working position thereof, longitudinal direction X-X corresponding to the front width of the indicator, and transverse direction Y-Y corresponding to the direction of the thickness of the indicator, a reflective level indicator according to the invention comprises essentially:
- ) a central support 10, with a longitudinal cavity 15, extending in the vertical direction Z-Z, the opposite short sides 10b of which have holes 12 and the opposite long sides 10a of which have a respective depression 11 in the transverse direction Y-Y suitable for containing an associated seal 20; according to a preferred embodiment the support 10 has a side opposite to that where the open cavity 11 is situated, having suitably chamfered edges 10c;
- ) a glass element 30 extending in the vertical direction Z-Z and of suitable thickness for withstanding the operating pressures; said glass element is partially contained within the depression 11 of the support 20 so as to remain locked in position in the two directions, i.e. vertical direction Z-Z and longitudinal direction X-X;
- ) a pair of flanges 40 for enclosing the indicator, which have:
   - a C-shaped central body with a base 41 extending in the transverse direction Y-Y over the entire length in the vertical direction Z-Z of the indicator and first short arms 42b for making contact with the glass element 30, extending in the longitudinal direction X-X over a length such as to project above, in the same direction X-X, only the outer edge 30a of the glass element 30, or in any case such as to leave a vertical strip of glass free for viewing from the outside; conveniently at least the short arms 42b making contact with the glass are internally lined with profiles 42a made of soft friction material; on the opposite side to the first short arms 42b, the base 41 of the flanges 40 has:
   - second arms 42c for making contact with the central support 10, which extend in the longitudinal direction X-X and are inclined from the outside towards the inside in the same direction X-X and from the central support 10 towards the outside in the transverse direction Y-Y;
   - a foot 43 which extends from each one of the two second arms 42c of the base 41 of the C in the transverse direction Y-Y and the free end of which has a flange 43a bent in the longitudinal direction X-X; the feet 43 have holes 43b for the passage of longitudinal tie members shown by way if example in the figures in the form of bolts 44a suitable for joining together with respective nuts 44b.

Preferably at least two cross-pieces 45 in the form of an overturned U are also provided, said cross-pieces extending in the longitudinal direction X-X and the free ends 45a of which can be inserted in the transverse direction Y-Y into respective seats 41d of the flanges 40; said cross-pieces serve to facilitate assembly of the indicator, without having a structural function.

As shown in Fig. 4, when assembly has been completed, the indicator has:
- ) the glass element 30 housed in the depression 11 of the central support piece 10 with the arrangement, in between, of the seal 20 and assembly thus formed contained between the two first short arms 42b, with profiles 42a in contact with the glass element, and the second arms 42c making contact with the support 10;
- ) flanges 40 arranged opposite each other and with
   - second arms 42c making contact with the edges of the surface of the support 11 opposite to that of the glass element 10;
   - bolts 44a inserted into the respective holes 43a and joined together with the associated nuts 44b;
   - cross-pieces 45 mounted on the opposite ends of the flanges 41;

Preferably:
- ) the base 41 of the C-shaped central element is not flat, but has two half surfaces 41a, 41b which are symmetrical with respect to an axis parallel to the vertical direction Z-Z and form a relative angle α;
- ) the second arms 42c have an inclination in the transverse direction Y-Y and outwards with respect to the base 41 so as to form an angle of between 5° and 95° and preferably between 10° and 90°.

With the configuration described the clamping action of the containing flanges 40 on the glass element 30 is determined by the inclined surfaces formed by the second arms 42c of the C-shaped body which are adjacent to the feet 43 and which press against the chamfers 10c of the body 10 so that the support piece in turn pushes the glass element against the opposite arms of the C; opening of the containing body 40 being prevented by the relative contact between the ends of the flanges 43a of the feet, the contact point of which forms the reaction fulcrum for clamping the body itself.

The indicator according to the invention offers greater resistance to the forces which are due to the pressure of the fluid and which act in the transverse direction Y-Y, making it possible to avoid deformation in the direction perpendicular to the plane of the glass element, although having a lighter structure able to perform simultaneous pressing of the glass element against the glass guard also along the sides and without the need for additional parts, while favouring the stability and measuring precision.

In addition, the dimensions of the tie members are also reduced with a consequent reduction in the deformation thereof, said dimensions being further reduced in that the tie members are exposed to the air over most of their length, reducing the conductivity and increasing the heat dissipation.

As shown in Fig. 4, it is also envisaged that at least one of the seals 120 between glass element and support body may have a wedge-like form in order to compensate for movement away of the glass element due to the said pressures.

Although described in connection with certain constructional forms and certain preferred examples of embodiment of the invention, it is understood that the scope of protection of the present patent is defined solely by the following claims.

## Claims

1. Reflective level indicator comprising a central support piece (10) extending in the vertical direction (Z-Z), a glass element (30) extending in the vertical direction (Z-Z), a pair of flanges (40) situated opposite each other for closing the indicator, seals (20;120) arranged between the glass element (30) and the support piece (10) and the closing flanges (40), wherein said flanges (40) have a C-shaped central body (41) with first short arms (42b) extending in the longitudinal direction (X-X) along a section with a length such as to project above the glass element, in the same direction (X-X), by an amount smaller than half the width of the glass element (30) in the longitudinal direction, second arms (42c), and a foot (43) which extends from each one of said second arms (42c) of the central body (41) in the transverse direction (Y-Y), **characterized in that** the second arms (42c) form an inclined surface pressing against the support (10), the free end of each foot (43) has a flange (43a) bent in the longitudinal direction (X-X) inwards, with respective free ends of the flanges (43a) in contact with each other, and said feet (43) have holes (43b) for receiving longitudinal (X-X) tie members (44a,44b).

2. Indicator according to Claim 1, **characterized in that** the point of contact between the ends of the flanges (43a) of the feet (43) forms the reaction fulcrum for clamping of the closing flanges (40).

3. Indicator according to Claim 1, **characterized in that** the base (41) of the C-shaped central element has two half surfaces (41a,41b) which are symmetrical with respect to an axis parallel to the vertical direction (Z-Z) and form a relative angle (α).

4. Indicator according to Claim 1, **characterized in that** the second arms (42c) of the flanges (40) have an inclination in the transverse direction (Y-Y) and outwards with respect to the base (41) forming an angle of between 5° and 95°.

5. Indicator according to Claim 1, **characterized in that** at least the seal (120) between glass element (30) and support body (11) has a wedge-like form.

6. Indicator according to Claim 1, **characterized in that** it comprises at least two cross-pieces (45) in the form of an overturned U which extend in the longitudinal direction (X-X) and the free ends (45a) of which can be inserted in the transverse direction (Y-Y) inside respective seats (41d) of the flanges (40).
